**Europäisches Patentamt**

**European Patent Office**

**Office européen des brevets**

(19)

(11) Numéro de publication: **0 128 091**
**B1**

(12) FASCICULE DE BREVET EUROPEEN

(45) Date de publication du fascicule du brevet:
**27.01.88**

(21) Numéro de dépôt: **84401117.1**

(22) Date de dépôt: **30.05.84**

(51) Int. Cl.⁴: **G 21 C 7/10**

(54) **Dispositif de guidage des grappes de contrôle de réacteurs nucléaires.**

(30) Priorité: **03.06.83 FR 8309275**

(43) Date de publication de la demande:
**12.12.84 Bulletin 84/50**

(45) Mention de la délivrance du brevet:
**27.01.88 Bulletin 88/4**

(84) Etats contractants désignés:
**AT BE CH DE GB IT LI SE**

(56) Documents cités:
**EP - A - 0 060 778**
**EP - A - 0 079 828**
**FR - A - 1 560 777**
**FR - A - 2 254 859**
**FR - A - 2 397 043**
**FR - A - 2 399 715**

(73) Titulaire: **FRAMATOME ET CIE., Tour Fiat 1, Place de la Coupole, F-92400 Courbevole (FR)**

(72) Inventeur: **Denizou, Jean-Pierre, 15 hameau des Amandines, F-69290 Craponne (FR)**

(74) Mandataire: **Fort, Jacques et al, CABINET PLASSERAUD 84, rue d'Amsterdam, F-75009 Paris (FR)**

## Description

L'invention a pour objet un réacteur nucléaire comprenant:

– un cœur constitué d'assemblages de combustible disposés côte à côte et refroidis par circulation ascendante d'un fluide de refroidissement;
– des grappes de contrôle du réacteur nucléaire formées chacune de plusieurs crayons absorbants déplaçables verticalement et reliés ensemble par une araignée à bras radiaux à une tige axiale de commande commune, les crayons présentant une répartition telle que certains sont disposés par couples de deux crayons alignés radialement par rapport à l'axe de la grappe; et
– des dispositifs de guidage des grappes de contrôle dans leurs déplacements au-dessus du cœur, comportant chacun un boîtier de guidage à l'intérieur desquels des plaques horizontales assurent, à la partie supérieure du boîtier, un guidage discontinu des crayons absorbants de la grappe de contrôle.

On connaît (FR-A 2 397 043) un réacteur nucléaire à eau sous pression du type ci-dessus défini. Les dispositifs de guidage des grappes de contrôle sont rendus nécessaires par le fait que les crayons absorbants peuvent être sortis entièrement à l'éxtérieur du cœur, sont très longs et sans autre liaison entre eux qu'à leur extrémité supérieure où se trouve l'araignée. En plus du guidage discontinu des crayons absorbants, le document FR-A 2 397 043 assure un guidage individuel de chaque crayon absorbant au moyen de tubes de guidage immédiatement au dessus du cœur. Dans cette zone le guidage est assuré exclusivement par des tubes, aussi bien pour ce qui est des crayons isolés que des crayons disposés par couples. Ces tubes sont fendus et ont un diamètre ajusté à celui des crayons, qui glissent à frottement doux.

Au niveau du guidage continu, il existe un gradient de pression dans un plan horizontal et, du fait que chaque fourreau de guidage est ouvert, ce gradient de pression tend à appliquer le crayon absorbant contre les lèvres de la fente, ce qui provoque une usure par frottements.

Pour limiter ce phénomène, on pourrait penser qu'il suffit de prévoir des ouvertures d'équilibrage de pression dans les faces du fourreau de guidage. Mais on réduit ainsi la résistance mécanique.

L'invention vise à réaliser un guidage de chaque crayon absorbant d'une grappe de contrôle tel que les crayons soient protégés dans la zone de grande turbulence où le fluide de refroidissement primaire qui sort des assemblages combustibles tourne pour se diriger vers les sorties latérales de la cuve qui contient le cœur, mais cela sans frottements excessifs.

Dans ce but, l'invention propose un réacteur du type défini au début de la demande, conforme à la partie caractérisante de la revendication 1.

En clair, conformément à l'invention, le guidage mécanique des crayons est réalisé uniquement par des plaques horizontales mais ces plaques sont reliées par des cartes qui tranquillisent le fluide de refroidissement sans ajouter d'efforts de frottements notables à ceux exercés par les plaques.

Pour arriver à ce résultat, il a fallu constater que le guidage mécanique continu n'était pas nécessaire, mais à la condition expresse que soit assurée une tranquillisation de l'écoulement hydraulique autour des crayons, cette tranquillisation devant être assurée par des moyens n'augmentant pas notablement les frottements.

Le document EP-A1 0 079 828 peut être regardé comme une tentative de s'affranchir des inconvénients du dispositif suivant le document FR-A 2 397 043 en ajoutant des lèvres sur les tubes qui assurent un guidage continu par glissement à frottements. Mais cette solution ne constitue qu'un paliatif qui ne peut en rien conduire à substituer, aux fourreaux dans lesquels glissent les crayons, des carters qui n'ont plus qu'une fonction de protection hydraulique.

L'invention sera mieux comprise à la lecture de la description qui suit d'un exemple particulier de réalisation. La description se réfère aux dessins annexés, dans lesquels:

– figure 1 est une vue en coupe verticale générale de la partie supérieure du réacteur;
– figure 2 est une vue en coupe verticale, passant par les fourreaux de guidage doubles, d'un dispositif de guidage;
– figure 3: une vue en coupe transversale selon III–III de la figure 2;
– figure 4: une vue en coupe transversale selon IV–IV de la figure 2;
– figure 5: une vue en perspective partielle du dispositif de guidage continu;
– figure 6: une vue en coupe transversale selon V–V de la figure 5, montrant deux variantes du trou de guidage des crayons absorbants.
– figure 7: une vue en perspective partielle d'une variante du dispositif de guidage.

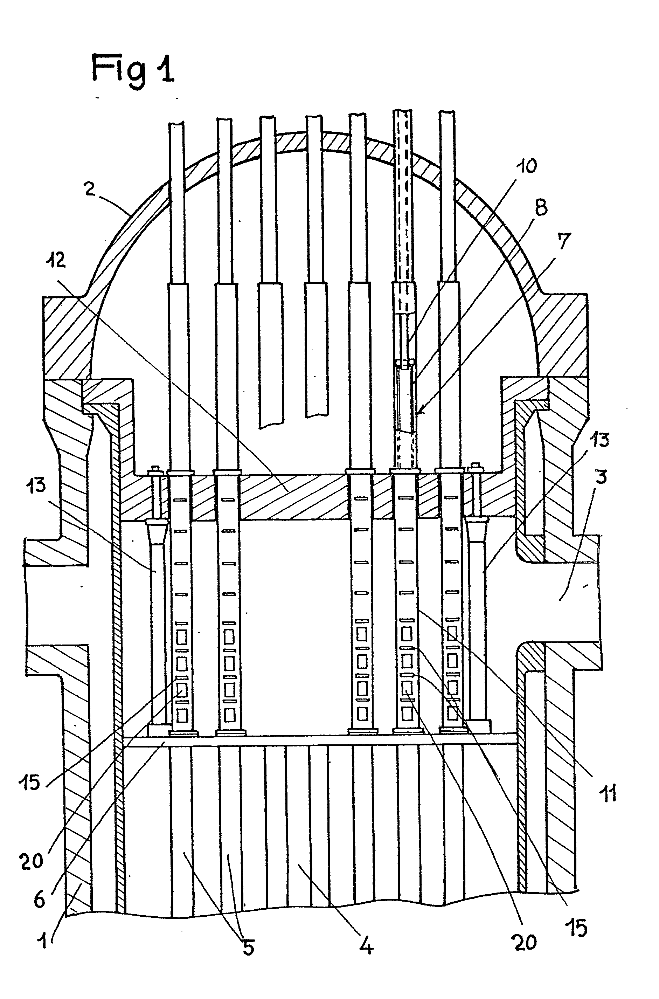

Le réacteur considéré est un réacteur du type à eau pressurisée, dans lequel le cœur du réacteur est enfermé dans une cuve sous pression et traversé par de l'eau de refroidissement le parcourant dans le sens ascendant. Comme l'invention concerne la réalisation du guidage des grappes de contrôle de la réactivité, au-dessus du cœur, on n'a représenté sur la figure 1 que la partie supérieure du réacteur. On y voit cependant, en partie, le cœur 4 et la cuve 1, avec son couvercle 2 et, latéralement, l'une des tubulures de sortie de l'eau 3.

Le cœur est constitué d'un ensemble d'assemblages combustibles 5 juxtaposés, chacun formé d'un nombre important de crayons verticaux de matériau combustible. La limite supérieure du cœur, juste au-dessus des assemblages combustibles, est définie par une plaque dè cœur 6. La réglage de la réactivité en fonctionnement est assuré en introduisant plus ou moins des grappes de contrôle dans certains des assemblages du

cœur. Ces grappes de contrôle 7 sont constituées chacune de plusieurs crayons 8, en matériau absorbant, reliés ensemble à leur extrémité supérieure par une araignée 9 à bras radiaux, solidaire d'une tige de commande 10. Les grappes sont manœuvrées depuis l'extérieur de la cuve de manière à déplacer les crayons absorbants longitudinalement entre les crayons combustibles de l'assemblage correspondant. La plaque de cœur 6 est percée d'ouvertures permettant d'une part le passage des crayons absorbants pénétrant dans le cœur, d'autre part de la sortie de l'eau de refroidissement qui quitte le cœur pour se diriger ensuite vers les tubulures 3, qui sont situées à un niveau supérieur à celui de la plaque de cœur 6.

Au-dessus du cœur, les déplacements des grappes de contrôle sont guidés par des boîtiers parallélépipédiques 11, suspendus en position verticale à une plaque support supérieure 12 qui reporte le poids de l'ensemble du dispositif de guidage des grappes de contrôle sur la cuve 1. En dehors des boîtiers 11, la plaque de cœur 6 et la plaque support supérieure 12 sont reliées entre elles par des colonnes 13.

Chaque boîtier 11 entoure l'ensemble des crayons de la grappe de contrôle dont il assure le guidage. Il traverse la plaque support supérieure 12 à laquelle il est suspendu par une bride boulonnée. A différents niveaux à intervalles réguliers, des plaques de guidage intermédiaires 14 sont montées en travers du boîtier. Chacune s'engage sur les quatre faces de boîtier à travers des lumières 15 pratiquées dans la paroi du boîtier; elle est soudée au boîtier le long de ces lumières.

La plaque de guidage 14, au-dessus de la zone de guidage continu, a pour fonction d'assurer le guidage précis de l'araignée 9 au moment où l'ensemble de la grappe de contrôle chute.

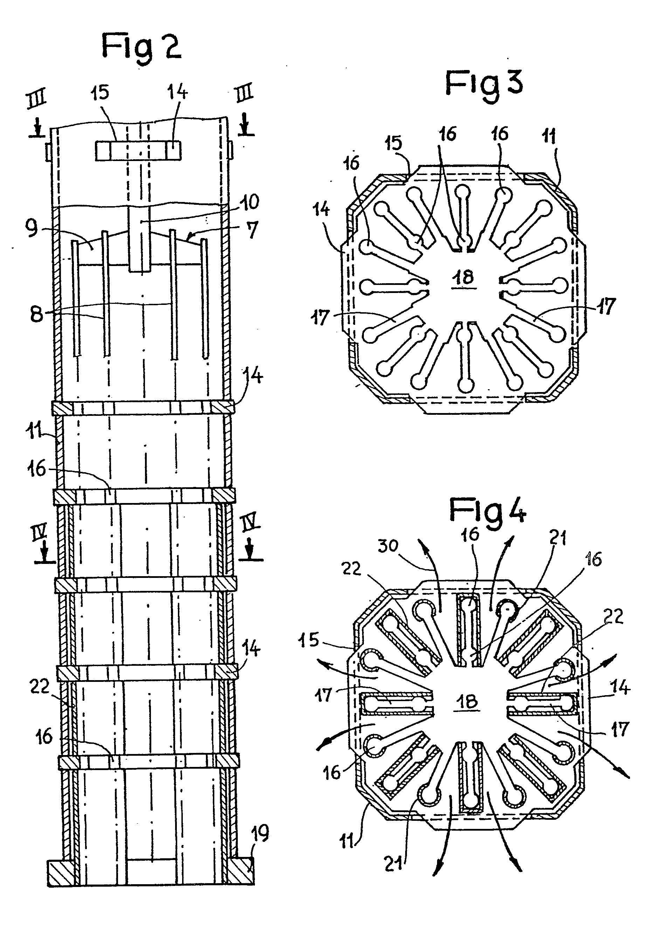

Les plaques de guidage intermédiaires 14 assurent, dans la partie haute de chaque boîtier 11, un guidage discontinu des différents éléments de la grappe de contrôle, et dans la partie basse, un guidage continu par l'intermédiaire de fourreaux de guidage comme on le verra ultérieurement. Elles comportent à cet effet (figures 3 et 4) des trous circulaires 16 pour le guidage des crayons absorbants individuels, et d'autre part des fentes radiales 17 reliant les trous 16 entre eux et à une large ouverture centrale 18, ce qui permet aussi le passage et le guidage de l'araignée 9 et de la tige de commande 10. L'araignée 9 peut descendre au-delà de la plaque 19 (figure 2) qui constitue une bride de positionnement du dispositif de guidage sur la plaque de cœur 6.

Le positionnement est assuré par des pions centreurs qui sont fixés dans la plaque supérieure de cœur. La bride 19 comporte des ouvertures ménagées en face de ladite plaque supérieure de cœur 6 pour laisser passer le liquide de refroidissement sortant du cœur. Le boîtier 11 est muni, sur une hauteur correspondant au guidage continu ou plus, d'ouvertures 20, permettant l'évacuation latérale du flux de liquide ascendant.

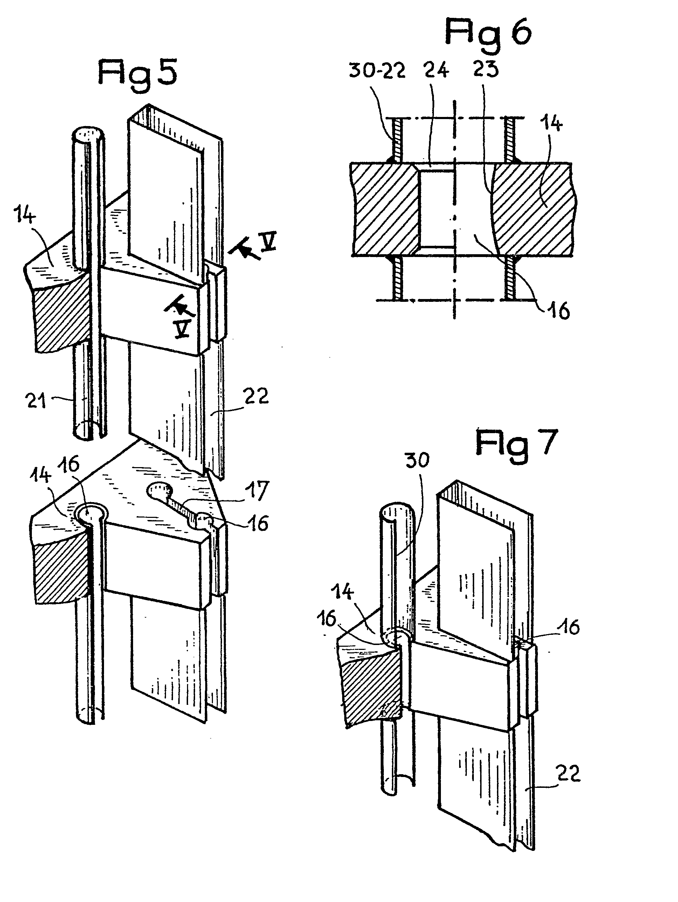

A la partie inférieure des boîtiers 11, dans la zone dite de guidage en continu, le guidage des différents éléments de la grappe de contrôle 7 est assuré par des plaques de guidage 14 et des fourreaux verticaux qui se composent (figures 4 et 5) d'une part de tubes fendus 21 pour les crayons absorbants les plus éloignés du centre et non alignés avec d'autres sur un rayon et de plus, situés près des coins et d'autre part de carters hydrauliques 22 pour tous les autres crayons absorbants positionnées par couples sur un rayon et soumis au flux hydraulique maximum.

Les tubes fendus 21 (figure 5) dont le diamètre intérieur est ajusté au diamètre des crayons 8, traversent les plaques de guidage 14 et assurent alors seul le guidage continu des crayons périphériques individuels et le guidage de l'araignée 9 pendant la chute de la grappe de contrôle.

Les carters hydraulique 22 ont une section en U à épaisseur constante et sont disposés entre les plaques de guidage 14. Ils sont, par ailleurs, reliés auxdites plaques par soudure à la façon d'entretoises discontinues et peuvent être réalisés par formage de tôle. Leur assise se fait sur la plaque 14 par des parties rayonnantes, chaque plaque gardant les deux trous 16 de guidage à faible jeu pour les crayons absorbants 8 ou l'araignée 9. Le fond des carters hydrauliques 22 est droit ou arrondi. D'autre part, les trous 16 pour le guidage mécanique des crayons absorbants positionnés par couples sont, soit de forme évasée 23 dans le sens axial vers les faces des plaques 14, soit munis de chanfreins 24 (figure 6).

Le flux ascendant du liquide de refroidissement qui sort des éléments combustibles 5 remplit les boîtiers 11 et les intervalles entre les crayons et les fourreaux de guidage. Les courants de circulation indiqués par les flèches 30 (figure 4) établissent, dans un plan horizontal, quatre zones de grande vitesse en regard des ouvertures 20 du boîtier, et quatre zones de plus faible vitesse en correspondance avec les coins du boîtier. Ces quatre flux hydrauliques radiaux et opposés entretiennent à l'intérieur des carters hydrauliques 22, une surpression dans un fluide où il n'existe aucun courant de sens radial, mais par contre un faible courant axial du fait des larges sections de passage d'eau entre les crayons 8 et les carters 22. La répartition de la pression se fait donc uniformément dans un plan radial pour tout le fluide interne. Par conséquent, les crayons absorbants des grappes ne sont pas sollicités par des efforts hydrauliques différentiels sur leur section radiale et restent maintenus dans un fluide tranquillisé. Les carters hydrauliques jouent le rôle de tranquillisateur hydrauliques autour des crayons absorbants des grappes de contrôle.

Pour les carters hydrauliques situés dans les coins du boîtier de guidage, le rôle est identique vis à vis du flux hydraulique radial sortant par les deux faces adjacentes. Par contre, si un déséquilibre se produit, entre les débits sortant radialement des deux faces adjacentes pour des raisons de configuration géométriques en aval du boîtier de guidage, les carters protègent aussi les crayons des efforts transversaux initiés par ces variations de débit. Les trous des plaques de guidage intermédiaires jouent toujours leur rôle de guidage mécanique des crayons absorbants.

Dans la variante selon la figure 7, les carters hydrauliques 22 sont identiques à ceux de l'exemple précédent, mais dans ce cas, les tubes fendus 30 pour les crayons périphériques individuels ont un diamètre intérieur supérieur avec jeu au diamètre desdits crayons et sont disposés entre les plaques de guidage 14. Ils sont reliés auxdites plaques par soudure à la façon d'entretoises discontinues, chaque plaque gardant les trous 16 de guidage à faible jeu pour les crayons absorbants 8 ou de l'araignée 9. Ces trous 16 sont également, soit de forme évasée dans le sens axial vers les faces des plaques de guidage, soit munis de chanfreins.

Les tubes fendus 30 permettent donc de minimiser, autour des crayons périphériques individuels, les effets hydrauliques par la tranquillisation du fluide de refroidissement dans le sens radial, et de réduire lors de la chute de la grappe de contrôle les effets de surpression hydraulique.

Il est bien entendu que l'on peut sans sortir du cadre de l'invention, imaginer des variantes et des perfectionnements de détails et de même envisager l'emploi de moyens équivalents. Le dispositif de l'invention est utilisable sur toutes les zones dites de guidages continus de crayons élancés montés sur des supports multibranches, que l'on veut protéger des effets des courants hydrauliques radiaux et transversaux. D'autre part, le guidage étant assuré par des éléments sur des longueurs réduites, on est assuré de minimiser l'usure des crayons de grappe lors des déplacements, repoussant ainsi plus loin la fréquence admissible de ces déplacements et acceptant ainsi des modes de fonctionnement modernes par téléréglage ou suivi de charge.

**Revendications**

1. Réacteur nucléaire comprenant: un cœur constitué d'assemblages de combustible disposés côte à côte et refroidis par circulation ascendante d'un fluide de refroidissement; des grappes de contrôle du réacteur nucléaire formées chacune de plusieurs crayons absorbants (8) déplaçables verticalement et reliés ensemble par une araignée à bras radiaux à une tige axiale de commande commune, les crayons présentant une répartition telle que certains sont disposés par couples de deux crayons alignés radialement par rapport à l'axe de la grappe; et des dispositifs de guidage des grappes de contrôle dans leurs déplacements au-dessus du cœur, comportant chacun un boîtier de guidage à l'intérieur desquels des plaques horizontales assurent, à la partie supérieure du boîtier (11), un guidage discontinu des crayons absorbants de la grappe de contrôle, caractérisé en ce qu'à la partie inférieure de chaque boîtier (11), les crayons absorbants (8) positionnés par couples sont guidés mécaniquement sur leur périphérie uniquement par les plaques horizontales (14) et en ce que chaque couple est entouré par un carter (22) reliant chacun deux plaques, délimitant un espace de tranquillisation du fluide de refroidissement autour desdits crayons absorbants et minimisant les effets hydrauliques sur les crayons.

2. Réacteur nucléaire selon la revendication 1, caractérisé en ce qu'à ladite partie inférieure des boîtiers (11) les crayons absorbants (8) périphériques individuels sont guidés mécaniquement par les plaques horizontales (14), et elles seules, et en ce que lesdits crayons individuels sont entourés par des tubes fendus (30) de diamètre intérieur supérieur avec jeu au diamètre des crayons absorbants pour minimiser les effets hydrauliques par la tranquillisation du fluide de refroidissement dans le sens radial autour desdits crayons absorbants.

3. Réacteur nucléaire selon la revendication 1, caractérisé par le fait que les carters hydrauliques (22) sont disposés entre les plaques horizontales (14) à la façon d'entretoises discontinues.

4. Réacteur nucléaire selon la revendication 2, caractérisé par le fait que les tubes fendus (30) sont disposés entre les plaques horizontales (14) à la façon d'entretoises discontinues.

5. Réacteur nucléaire selon les revendications 1 et 2, caractérisé par le fait que les plaques horizontales (14) comportent des trous (16) pour le guidage mécanique des crayons absorbants (8), qui sont, soit de forme évasée (23) dans le sens axial vers les faces des plaques (14), soit munis de chanfreins (24).

6. Réacteur nucléaire selon les revendications 1 et 3, caractérisé par le fait que les carters hydrauliques (22) ont une section en U à épaisseur constante, obtenus par formage de tôle.

7. Réacteur nucléaire selon les revendications 3 et 4, caractérisé par le fait que les carters hydrauliques (22) et les tubes fendus (30) sont reliés aux plaques horizontales (14) par soudure.

8. Réacteur nucléaire selon la revendication 6, caractérisé par le fait que le fond des carters hydrauliques (22) est droit ou arrondi.

**Patentansprüche**

1. Kernreaktor mit einem Kern, der aus Brennstoffbündeln gebildet ist, die nebeneinander angeordnet und durch eine aufsteigende Strömung einer Kühlflüssigkeit gekühlt sind; mit Stabbündeln zum Steuern des Kernreaktors, die je aus mehreren absorbierenden Stäben (8) gebildet sind, welche vertikal bewegbar und gemeinsam durch eine Spinne mit radialen Armen mit einer gemeinsamen axialen Steuerstange verbunden sind, wobei die Stäbe eine derartige Verteilung haben, dass bestimmte Stäbe paarweise bezüglich der Achse des Bündels radial ausgerichtet sind; und mit Vorrichtungen zur Führung der Steuerstäbe bei ihrer Verlagerung oberhalb des Kernes, die je ein Führungsgehäuse aufweisen, in dessen Inneren horizontale Platten im oberen Teil des Gehäuses (11) eine diskontinuierliche Führung der absorbierenden Stäbe des Steuerbündels sichern, dadurch gekennzeichnet, dass die paarweise angeordneten absorbierenden Stäbe (8) im unteren Teil jedes Gehäuses (11) mechanisch an ihrem Umfang lediglich durch horizontale Platten (14) geführt sind und dass jedes Paar von einem Kasten (22) umgeben ist, welcher zwei Platten verbindet, einen Beruhigungsraum für die Kühlflüssigkeit um die absorbierenden Stäbe herum begrenzt und den Flüssigkeitsdruck auf diese Stäbe vermindert.

2. Kernreaktor nach Anspruch 1, dadurch gekennzeichnet, dass die umfangseitigen absorbierenden Stäbe (8) im unteren Teil der Gehäuse (11) einzeln mechanisch durch die horizontalen Platten (14) geführt sind, und nur durch diese, und dass die einzelnen Stäbe von geschlitzten Rohren (30) umgeben sind, deren Innendurchmesser mit Spiel grösser als der Durchmesser der absorbierenden Stäbe ist, um den Flüssigkeitsdruck durch Beruhigung der Kühlflüssigkeit in radialer Richtung um die absorbierenden Stäbe herum zu vermindern.

3. Kernreaktor nach Anspruch 1, dadurch gekennzeichnet, dass die Flüssigkeitskästen (22) zwischen den horizontalen Platten (14) in Form von diskontinuierlichen Abstandhaltern angeordnet sind.

4. Kernreaktor nach Anspruch 2, dadurch gekennzeichnet, dass die geschlitzten Rohre (30) zwischen den horizontalen Platten (14) in Form von diskontinuierlichen Abstandhaltern angeordnet sind.

5. Kernreaktor nach den Ansprüchen 1 und 2, dadurch gekennzeichnet, dass die horizontalen Platten (14) Durchtrittsöffnungen (16) für die mechanische Führung der absorbierenden Stäbe (8) aufweisen, die entweder in axialer Richtung gegen die Seiten der Platten (14) hin erweiterte Form (23) haben oder mit Fasen (24) versehen sind.

6. Kernreaktor nach den Ansprüchen 1 und 3, dadurch gekennzeichnet, dass die Flüssigkeitskästen (22) einen U-förmigen Querschnitt mit konstanter Dicke haben, der durch Blechverformung erhalten wird.

7. Kernreaktor nach den Ansprüchen 3 und 4, dadurch gekennzeichnet, dass die Flüssigkeitskästen (22) und die geschlitzten Rohre (30) mit den horizontalen Platten (14) verschweisst sind.

8. Kernreaktor nach Anspruch 6, dadurch gekennzeichnet, dass der Boden der Flüssigkeitskästen (22) eben oder gewölbt ist.

**Claims**

1. Nuclear reactor comprising: a core consisting of fuel assemblies located side-by-side and cooled by an upward flow of a cooling fluid; clusters for controlling the nuclear reactor each formed of a plurality of absorbing rods (8) vertically movable and connected together by a spider having radially directed arms to a common axial drive shaft, the rods having such a distribution that some of them are located as pairs of two rods radially aligned with respect to the axis of the cluster; and devices for guiding the control clusters during their movements above the core, each having a guide casing within which horizontal plates achieve discontinuous guiding of the absorbing rods of the control cluster in the upper part of the casing (11), characterized in that, in the lower portion of each casing (11), those absorbing rods (8) which are arranged in pairs are mechanically guided on their periphery by the horizontal plates (14) only and in that each pair is surrounded by an envelope (22) each connecting two plates, defining a cooling fluid steadying space around said absorbing rods and decreasing the hydraulic actions onto the rods.

2. Nuclear reactor according to claim 1, characterized in that, at said lower portion of the casings (11), the individual peripheral absorbing rods (8) are mechanically guided by the horizontal plates (14) only and in that said individual rods are surrounded by slotted tubes (30) whose internal diameter is greater than the diameter of the absorbing rods with a clearance for minimizing the hydraulic effects by calming the cooling fluid in the radial direction around said absorbing rods.

3. Nuclear reactor according to claim 1, characterized in that the hydraulic envelopes (22) are arranged between the horizontal plates (14) in the manner of discontinuous spacers.

4. Nuclear reactor according to claim 2, characterized in that the slotted tubes (30) are arranged between the horizontal plates (14) in the manner of discontinuous spacers.

5. Nuclear reactor according to claims 1 and 2, characterized in that the horizontal plates (14) are formed with holes (16) for mechanically guiding the absorbing rods (8), which are either flared (23) in the axial direction towards the surface of the plates (14), or formed with chamfers (24).

6. Nuclear reactor according to claims 1 and 3, characterized in that the hydraulic envelopes (22) have a U-shaped cross-section with constant thickness, obtained by forming sheet metal.

7. Nuclear reactor according to claims 3 and 4, characterized in that the hydraulic envelopes (22) and the slotted tubes (30) are joined to the horizontal plates (14) by welding.

8. Nuclear reactor according to claim 6, characterized in that the bottom of the hydraulic envelopes (22) is straight or rounded.

# Fig 1

# Fig 2

# Fig 3

# Fig 4

Fig 5

Fig 6

Fig 7